Europäisches Patentamt

European Patent Office

Office européen des brevets

(11) Veröffentlichungsnummer: **0 306 877 B1**

# EUROPÄISCHE PATENTSCHRIFT

(45) Veröffentlichungstag der Patentschrift: **04.03.92**

(21) Anmeldenummer: **88114434.9**

(22) Anmeldetag: **03.09.88**

(51) Int. Cl.⁵: **C08J 9/224**, E06B 3/66, C08L 25/06

(54) **Verwendung von Polystyrol-Schaumstoffkugeln für bewegliche Wärmedämmung und Beschattung von transparenten Gebäudeteilen.**

(30) Priorität: **08.09.87 DE 3730023**

(43) Veröffentlichungstag der Anmeldung:
**15.03.89 Patentblatt 89/11**

(45) Bekanntmachung des Hinweises auf die
Patenterteilung:
**04.03.92 Patentblatt 92/10**

(84) Benannte Vertragsstaaten:
**BE DE FR GB NL**

(56) Entgegenhaltungen:
**EP-A- 0 044 288**
**US-A- 3 462 293**
**US-A- 3 903 665**
**US-A- 4 599 366**

(73) Patentinhaber: **BASF Aktiengesellschaft**
**Carl-Bosch-Strasse 38**
**W-6700 Ludwigshafen(DE)**

(72) Erfinder: **Olbrich, Helmut**
**Akazienweg 1**
**W-6708 Neuhofen(DE)**
Erfinder: **Leppkes, Reinhard, Dr.**
**Eschkopfstrasse 2**
**W-6712 Bobenheim-Roxheim(DE)**

EP 0 306 877 B1

# Beschreibung

Die Erfindung betrifft die Verwendung von Polystyrol-Schaumstoffkugeln - im weiteren Schaumstoffkugeln genannt - für die bewegliche Wärmedämmung und Beschattung von transparenten Gebäudeteilen.

Es ist bekannt, transparente Gebäudeteile, wie beispielsweise Doppelfenster, zwei auf Abstand gehaltene PE-Folien oder Stegdoppelplatten aus Polyacryl mit Schaumstoffkugeln zum Zwecke einer Isolierwirkung gegen Wärmeverlust oder zum Zwecke der Beschattung zu befüllen. Solche für die Wärmedämmung bzw. Beschattung geeignete transparente Gebäudeteile sind beispielsweise in Büros, Wintergärten, Gewächshäusern, Werkshallen, etc. anzutreffen.

Hierbei ergeben sich jedoch verschiedene Nachteile, die nachstehend aufgezeigt werden. Das Auftreten von elektrostatischer Aufladung verhindert die vollständige Entleerung des Hohlraums, beispielsweise bei Doppelfenster. Die zur Vermeidung dieses Nachteils auf die Schaumstoffkugeln aufgebrachten Antistatika verlieren durch Abrieb einerseits ihre Wirkung und führen andererseits durch Abrieb zu einer Verminderung der Transparenz. Des weiteren führte wiederholte Förderung der Schaumstoffkugeln zum Befüllen und Entleeren des zu dämmenden Hohlraums zu einer mechanischen Schädigung derselben durch Deformation und Verdichtung auf höhere Schüttdichten.

Es stellte sich daher die Aufgabe, die elektrostatische Aufladung und Verdichtung von Polystyrol-Schaumstoffkugeln zu verhindern, so daß sie für die bewegliche Wärmedämmung und Beschattung von transparenten Gebäudeteilen geeignet sind.

Diese Aufgabe wird erfindungsgemäß dadurch gelöst, daß vor dem Aufschäumen zur Polystyrol-Schaumstoffkugel ein Antistatikum in ausreichender Konzentration auf die Oberfläche der treibmittelhaltigen Perle aufgebracht und dort fixiert wird.

Diese Fixierung des Antistatikums auf der Schaumstoffkugeloberfläche wird durch die Einbettung in einen Oberflächenfilm erreicht. Dieser Oberflächenfilm wird durch die Verwendung einer wäßrigen Dispersion gebildet, die eine niedere Glastemperatur, beispielsweise 10 bis 50°C aufweisen soll. Der klebfreie, farblose, harte Film entsteht durch Selbstvernetzung.

Am geeignetsten erwiesen sich Schaumstoffkugeln mit einer Schüttdichte von 10 bis 100 kg/m³ und einem Durchmesser von 4 bis 15 mm.

Als Antistatika kommen beispielsweise alkoxylierte Alkylamine und alkoxylierte Alkylammoniumsalze mit Alkylkettenlängen n = 1...20 in Betracht. Als Dispersion erwies sich eine wäßrige, weichmacherfreie Dispersion eines thermisch vernetzbaren Copolymerisats aus einem Acrylester und aus Styrol am vorteilhaftesten.

Bei der Förderung der Schaumstoffkugeln sind verfahrenstechnisch bekannte Grundprinzipien der pneumatischen Förderung zu beachten, um einen über einen langen Zeitraum störungsfreien Betrieb zu erreichen.

Durch die Verwendung obiger Schaumstoffkugeln wurde die Befüllung und Entleerung des Hohlraums nicht mehr durch elektrostatische Aufladung der Schaumstoffkugeln infolge Abrieb der antistatischen Substanzen beeinträchtigt. Des weiteren wurde der Abrieb der Beschichtungsmittel mit den antistatischen Substanzen auf der Kugeloberfläche stark vermindert, so daß keine Ablagerungen auf den transparenten Gebäudeteilen mehr zu verzeichnen waren.

Durch die Verwendung obiger Schaumstoffkugeln war eine Befüllung und Entleerung von transparenten Gebäudeteilen von jeweils 700 bis 1000 mal ohne jede Nachteile möglich, was einer 2- bis 3jährigen Betriebsdauer entspricht.

## Patentansprüche

1. Verwendung von Polystyrol-Schaumstoffkugeln für die bewegliche Wärmedämmung und Beschattung von transparenten Gebäudeteilen, wobei vor dem Aufschäumen zur Polystyrol-Schaumstoffkugel ein Antistatikum in ausreichender Konzentration auf die Oberfläche der treibmittelhaltigen Perle aufgebracht und mittels einer wäßrigen Dispersion fixiert wird.

2. Verwendung von Polystyrol-Schaumstoffkugeln nach Anspruch 1 wobei als Antistatika beispielsweise alkoxylierte Alkylamine und alkoxylierte Alkylammoniumsalze mit Alkylkettenlängen n = 1...20 verwendet werden.

3. Verwendung von Polystyrol-Schaumstoffkugeln nach Anspruch 1, wobei zur Fixierung eine wäßrige, weichmacherfreie Dispersion eines thermisch vernetzbaren Copolymerisats aus einem Acrylester und aus Styrol verwendet wird.

## Claims

1. The use of polystyrene foam beads for mobile heat insulation and shading of transparent parts of buildings, where, before foaming to give the polystyrene foam bead, an antistatic in sufficient concentration is applied to the surface of the blowing agent-containing beads and fixed by means of an aqueous dispersion.

2. The use of polystyrene foam beads as claimed in claim 1, where the antistatics used are, for example, alkoxylated alkylamines and alkoxylated alkyl ammonium salts having alkyl chain lengths n of from 1 to 20.

3. The use of polystyrene foam beads as claimed in claim 1, where the fixing is carried out using an aqueous, plasticizer-free dispersion of a thermally crosslinkable copolymer of an acrylate and styrene.

**Revendications**

1. Utilisation de billes de polystyrène alvéolaire pour l'amortissement thermique mobile et la protection du rayonnement solaire de parties de batiments transparents, un antistatique étant, avant l'expansion des billes de polysyrène alvéolaire, appliqué en concentration suffisante sur la surface des perles contenant le gonflant, et fixé au moyen d'une dispersion aqueuse.

2. Utilisation de billes de polystyrène alvéolaire selon la revendication 1, avec emploi, comme antistatique, par exemple, d'une alkylamine alcoxylée et d'un sel d'alkylammonium alcoxylé d'une longueur de chaîne $n = 1...20$.

3. Utilisation de billes de polystyrène alvéolaire selon la revendication 1, avec emploi, pour la fixation, d'une dispersion aqueuse, sans plastifiant, d'un copolymérisat, réticulable thermiquement, d'un ester acrylique et de styrène.